# FASCICULE DE BREVET EUROPEEN

(11) **EP 4 380 858 B1**
(45) Date de publication et mention de la délivrance du brevet: **04.06.2025**
(21) Numéro de dépôt: 22758565.0
(22) Date de dépôt: 01.08.2022
(51) Int. Cl.: B64C 11/06, B64C 11/30, F02K 1/66, F02K 3/06

(54) **MODULE DE SOUFFLANTE A PALES A CALAGE VARIABLE**
TURBINE MIT VERSTELLBAREM ANSTELLWINKEL
VARIABLE PITCH FAN MODULE

(30) Priorité: 04.08.2021 FR 2108461
(43) Date de publication de la demande: 12.06.2024
(73) Titulaire: SAFRAN AIRCRAFT ENGINES, 75015 Paris (FR)
(72) Inventeur: BELJAMBE, Ceddric, 77550 MOISSY-CRAMAYEL (FR); CHARIER, Gilles Alain Marie, 77550 MOISSY-CRAMAYEL (FR); RODA, Jean Charles Olivier, 77550 MOISSY-CRAMAYEL (FR)
(74) Mandataire: Gevers & Orès
(86) Numéro de dépôt international: PCT/FR2022/051535
(87) Numéro de publication internationale: WO 2023/012425

(56) Documents cités:
- EP-A1- 3 647 546
- FR-A1- 3 055 001
- FR-A1- 3 059 364
- FR-A1- 3 066 558
- FR-A1- 3 066 559

## Description

### DOMAINE TECHNIQUE

La présente invention concerne un module de soufflante à pales à calage variable pour un ensemble propulsif, et plus précisément un dispositif de mise en drapeau des pales adapté à une telle soufflante.

### TECHNIQUE ANTÉRIEURE

L'arrière-plan technique comprend notamment les documents FR 3 066 559 A1, FR 3 059 364 A1, EP 3 647 546 A1 et FR 3 055 001 A1.

Une soufflante munie de pales à calage variable (connue sous l'acronyme anglais VPF pour « Variable Pitch Fan ») permet de régler le calage (et plus précisément l'angle de cale) des pales en fonction des paramètres de vol, et ainsi d'optimiser le fonctionnement de la soufflante, et de manière générale de l'ensemble propulsif dans lequel une telle soufflante est intégrée. Pour rappel, l'angle de calage d'une pale correspond à l'angle, dans un plan longitudinal perpendiculaire à l'axe de rotation de la pale, entre la corde de la pale et le plan de rotation de la soufflante.

Il est connu des ensembles propulsifs ou turbomachines comprenant de manière générale une soufflante carénée ou une hélice non carénée équipée d'aubes mobiles à calage variable, équipés de ces systèmes de changement de pas.

Dans la catégorie des turbomachines à au moins une hélice non carénée, également appelées sous le terme anglais « open rotor » ou « unducted fan », il existe celles ayant une seule hélice non carénée et un redresseur comprenant plusieurs aubes de stator (connues sous l'acronyme anglais USF pour « Unducted Single Fan »).

Un turbomoteur de type open rotor comprend principalement, à l'intérieur d'un carter cylindrique fixe porté par la structure de l'aéronef, une partie « générateur de gaz » et une partie « propulsion » coaxiales. La partie générateur de gaz peut être disposée en amont ou en aval de la partie propulsion. Les termes « amont » et « aval » sont définis par rapport à la circulation des gaz dans la turbomachine. La partie propulsion comporte au moins une hélice entraînée en rotation par une turbine, notamment basse pression, de la partie générateur de gaz via un réducteur, par exemple, à trains épicycloïdaux.

Dans certains cas, la partie propulsion peut comporter deux hélices coaxiales et contrarotatives, respectivement amont et aval qui sont entrainées, en rotation inverse l'une de l'autre, par la turbine du générateur de gaz via le réducteur. La ou les hélices s'étendent sensiblement radialement vis-à-vis de l'arbre de transmission d'axe longitudinal à l'extérieur du carter.

De manière générale, la ou chaque hélice comprend un carter rotatif sensiblement cylindrique portant un moyeu à anneau polygonal extérieur reçu de façon rotative autour de l'axe longitudinal dans le stator de la turbomachine. L'anneau comporte des logements cylindriques radiaux répartis sur sa périphérie autour de l'axe longitudinal. Des arbres d'axes radiaux, perpendiculaires à l'axe longitudinal de la turbomachine, solidaires des pieds des pales sont reçus dans les logements des anneaux polygonaux et traversent également des passages radiaux du carter cylindrique.

Pour permettre le fonctionnement optimal du turbomoteur selon les différentes phases de vol rencontrées, les pales des hélices peuvent tourner dans les logements radiaux des anneaux polygonaux. Pour cela, elles sont entraînées en rotation autour de leurs axes de pivot respectifs, appelé axe de calage, par un système approprié permettant de faire varier le calage des pales en cours de vol, c'est-à-dire le pas des hélices.

Ce système de changement du pas des pales des hélices couvre une plage angulaire de rotation comprise entre deux positions extrêmes, à savoir une position extrême dite de « reverse » pour laquelle les pales dépassent par exemple de 30° le plan transversal à l'axe du turbomoteur (la direction d'avance de l'avion) pour participer au freinage de l'aéronef, à la manière des inverseurs de poussée usuels, et une position extrême dite de « mise en drapeau » pour laquelle les pales sont alors effacées au mieux par rapport à la direction d'avance, par exemple, en cas de panne moteur ou lors d'une défaillance (ou panne) du dispositif de commande du calage des pales (par exemple une défaillance d'un actionneur hydraulique) afin que ces dernières offrent le moins de résistance (traînée) possible.

De manière générale, un système de changement de pas des pales d'une hélice comporte un dispositif de commande et un mécanisme de liaison reliant le moyen de commande à chaque pale de l'hélice pour assurer le pivotement angulaire souhaité des pales.

En outre, la mise en drapeau des pales s'effectue généralement via des contrepoids. Usuellement, les contrepoids sont placés sur le pied de chaque pale et sont potentiellement très lourds en fonction de l'encombrement disponible et viennent charger en centrifuge et donc augmenter les contraintes du pied des pales et des roulements du pied des pales déjà très sollicités.

Différentes solutions ont été proposées pour changer le pas des pales d'une soufflante et effectuer la mise en drapeau des pales sur des turbomoteurs du type « open rotor » ou autres.

Par exemple, on connaît du document FR 3 066 559, un système de changement de pas des pales comprenant un seul vérin annulaire agencé sur un carter fixe ou stator interne par rapport au moyeu de la soufflante et un mécanisme de liaison comportant un palier de transfert, plus connu sous l'acronyme anglais LTB pour « Load Transfert Bearing », fixé d'un côté à la partie mobile du vérin et coopérant, de l'autre côté, avec un moyen de liaison du mécanisme aux pales du moyeu rotatif, de telle façon que le palier de transfert de charge du mécanisme entraîné en rotation transmette le déplacement en translation de la partie mobile du vérin fixe, au moyen de liaison du mécanisme rotatif pour changer l'orientation des pales de l'hélice. Ce système de changement de pas comporte en outre un dispositif de mise en drapeau des pales comportant des contrepoids avec un mécanisme de levier agencés dans le repère tournant, lié à la bague extérieure du palier de transfert de charge. L'utilisation de contrepoids avec un mécanisme de levier agissant sur le vérin permet de démultiplier l'effort et de profiter d'un espace vide pour diminuer la masse des contrepoids et ne pas solliciter le pied des pales.

Le fait d'avoir un actionneur linéaire dans un repère fixe permet de faciliter son alimentation en huile et de diminuer les masses en rotation. Toutefois, cette solution nécessite une cinématique plane du mécanisme de contrepoids, impliquant pour le mécanisme de changement de pas d'avoir un mouvement purement axial. Cette nécessité de mouvement purement axial entraine soit un surdimensionnement du système de levier soit un mécanisme extérieur, généralement encombrant et lourd, pour assurer la fonction anti-couple. De plus, si le mécanisme de changement de pas est purement axial il nécessite une force plus importante pour l'actionnement et cet effort se traduit en efforts internes et donc en contraintes mécaniques supplémentaires. Par ailleurs, le mécanisme de contrepoids à levier tel que présenté est hyperstatique rendant son dimensionnement, sa fabrication et son montage difficile.

En outre, le mécanisme de levier selon cette solution présente une cavité avec un tuyau d'évacuation, pour évacuer l'huile nécessaire au mécanisme de changement de pas comportant des roulements de transfert de charge qui nécessitant d'être lubrifiés, qui peuvent s'avérer techniquement compliqués.

L'objectif de la présente invention est ainsi de proposer un dispositif de mise en drapeau des pales permettant de palier à au moins certains de ces inconvénients.

### RÉSUMÉ DE L'INVENTION

À cet effet, l'invention concerne un module de soufflante à pales à calage variable pour un ensemble propulsif d'axe longitudinal, ledit module comprenant :
- un carter rotatif autour de l'axe longitudinal et portant les pales,
- un système de changement du calage des pales comprenant un dispositif de commande et un mécanisme de liaison, le dispositif de commande comportant un actionneur annulaire centré sur l'axe longitudinal ayant un corps fixe rapporté sur le carter rotatif et un corps mobile en translation par rapport au corps fixe le long de l'axe longitudinal, le corps mobile étant couplé à une couronne de synchronisation du mécanisme de liaison, ladite couronne de synchronisation étant reliée aux pales et configurée pour être entraînée en translation le long de l'axe longitudinal par le corps mobile de manière à changer le calage des pales ; et
- un dispositif de mise en drapeau des pales, en particulier en cas de défaillance dudit dispositif de commande, ledit dispositif de mise en drapeau comprenant une rangée annulaire de masselottes portées par le carter rotatif,

caractérisé en ce que la rangée annulaire de masselottes est couplée à la couronne de synchronisation, chacune des masselottes étant reliée à la couronne de synchronisation par une biellette dont une première et une seconde extrémités comportent des liaisons rotule et les masselottes étant aptes, sous l'effet centrifuge, à être déplacées dans une position dans laquelle la couronne de synchronisation impose une position drapeau aux pales.

L'invention permet ainsi d'assurer une mise en drapeau passive des pales d'une soufflante efficace en multipliant l'effort centrifuge de chaque masselotte tout en ayant des efforts de rappel plus faibles pendant la phase d'inversion de poussée.

En effet, l'invention transforme deux des liaisons pivots du mécanisme à levier en rotules de manière à permettre à la cinématique d'actionnement de pas de ne pas être hyperstatique et d'avoir un mouvement de translation et de rotation sans blocage et donc sans avoir besoin d'un mécanisme extérieur pour assurer la fonction anti-couple.

En outre, même en tenant compte d'un léger surdimensionnement du contrepoids pour prendre en compte une projection d'effort supplémentaire, le module est globalement plus léger et moins encombrant. L'invention permet au système de changement de pas d'avoir un mouvement hélicoïdal et rend de plus isostatique le système de contrepoids à levier.

De plus, l'invention étant sans roulement de transfert de charge, permet de limiter la propagation des fluides, en particulier de l'huile de lubrification. Un drainage des fuites potentielles de l'actionneur reste utile, cependant l'invention ne présente plus de cavité ni de tuyau.

Le module de soufflante selon l'invention peut comprendre une ou plusieurs des caractéristiques suivantes, prises isolément les unes des autres ou en combinaison les unes avec les autres :
- les liaisons rotule reliant la première extrémité de la biellette à la couronne de synchronisation et reliant la seconde extrémité de la biellette aux masselottes ont des axes perpendiculaires ;
- le dispositif de mise en drapeau comporte des leviers, chacun articulé autour d'un axe C fixe par rapport au carter rotatif agencé entre un premier et un deuxième bras du levier, le premier bras étant solidaire d'une masselotte et le deuxième bras étant relié à la seconde extrémité de la biellette par une des liaisons rotule, les deux bras étant fixes l'un par rapport à l'autre ;
- chaque levier est articulé par rapport au carter par une liaison pivot, de préférence formée par un roulement à aiguilles ou par deux roulements à billes ;
- ledit carter rotatif comporte un chapeau annulaire, et au moins un levier est articulé autour dudit axe par rapport au chapeau ;
- le chapeau comporte au moins un orifice de passage du second bras du au moins un levier articulé par rapport au chapeau, le premier bras du levier étant situé radialement à l'extérieur du chapeau ;
- le ou chaque orifice du chapeau comporte un déflecteur s'étendant radialement vers l'intérieur sur le pourtour de l'orifice.

L'invention concerne également un ensemble propulsif d'axe longitudinal comportant au moins un module de soufflante à pales à calage variable selon l'invention et tel que décrit précédemment.

### BRÈVE DESCRIPTION DES DESSINS

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
- la figure 1 est une vue en demi-coupe axiale (ou longitudinale) d'un module de soufflante comprenant un dispositif de mise en drapeau des pales, dans une première position, selon un plan axial passant par l'axe de rotation d'une pale de la soufflante ;
- la figure 2 est une vue en demi-coupe axiale du module de soufflante de la figure 1 dans laquelle le dispositif de mise en drapeau des pales est dans une deuxième position, selon un plan axial passant hors de l'axe de rotation d'une pale de la soufflante ;
- la figure 3 est une vue de détail en perspective du dispositif de mise en drapeau des pales de la figure 1 ;
- la figure 4 est une vue de détail en perspective du dispositif de mise en drapeau des pales de la figure 2 ;
- la figure 5 illustre schématiquement une des liaisons sphériques du dispositif de mise en drapeau des pales des figures 1 et 2 ;
- la figure 6 est une vue de détail en perspective d'une partie du dispositif de mise en drapeau des pales de la figure 2 ; et
- la figure 7 représente schématiquement les efforts du dispositif de mise en drapeau des pales selon l'invention.

Les éléments ayant les mêmes fonctions dans les différentes mises en œuvre ont les mêmes références dans les figures.

### DESCRIPTION DES MODES DE RÉALISATION

L'invention s'applique à un ensemble propulsif destiné à être monté sur un aéronef. L'aéronef comprend un fuselage et au moins deux ailes s'étendant de part et d'autre du fuselage suivant l'axe du fuselage. Au moins un ensemble propulsif est monté par exemple sous chaque aile. L'ensemble propulsif peut être un turboréacteur, par exemple un ensemble propulsif équipé d'une soufflante carénée (turbosoufflante) ou d'un turbopropulseur, par exemple un ensemble propulsif équipé d'une hélice non carénée (« open rotor », « USF » pour «Unducted Single Fan » ou « UDF » pour « Unducted Fan »). Bien entendu l'invention s'applique à d'autres types d'ensembles propulsifs, par exemple comportant deux hélices coaxiales et contrarotatives.

De manière générale et dans la suite de la description, le terme « soufflante » est employé pour désigner indifféremment une soufflante ou une hélice.

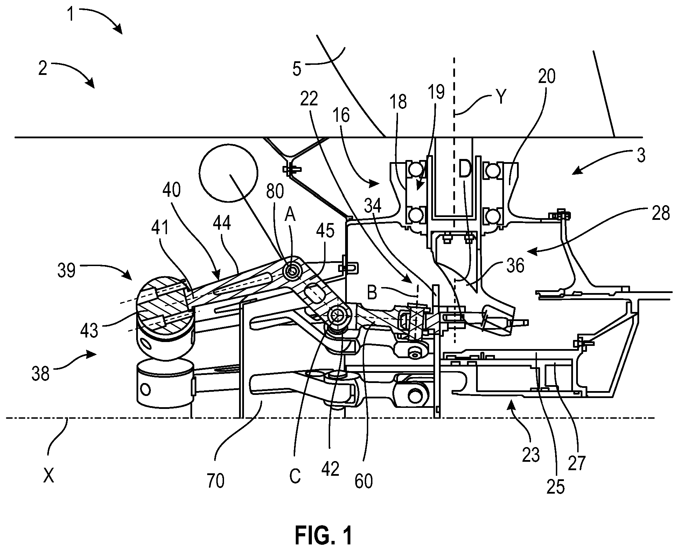

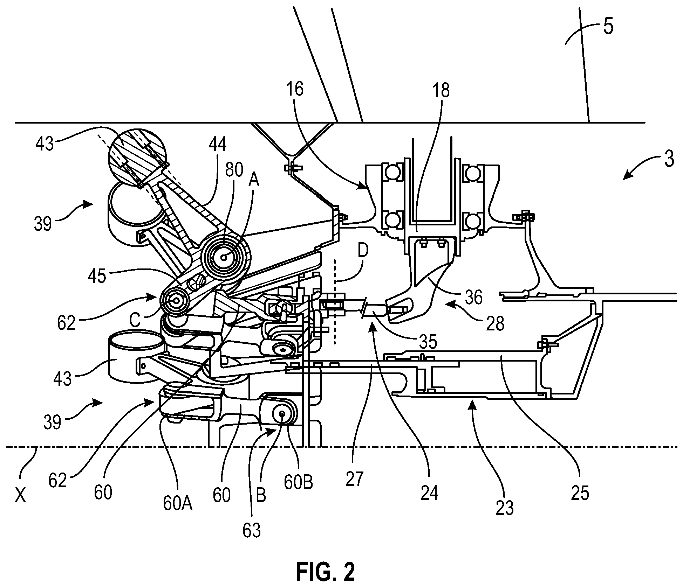

Sur les figures 1 et 2 est représentée une soufflante 1 d'un ensemble propulsif 2 d'axe X longitudinal. La soufflante 1 comporte un carter rotatif ou rotor 3 mobile autour de l'axe X par rapport à un carter fixe, le rotor 3 portant une série de pales 5 à calage variable. La soufflante 1 est ici placée en amont de la partie moteur de l'ensemble propulsif 2 qui comprend par exemple successivement d'amont en aval, un générateur de gaz et une turbine de puissance qui entraîne le rotor 3 de la soufflante 1 via un réducteur de vitesse. Par convention, dans la présente demande, les termes « amont » et « aval » sont définis par rapport au sens de circulation des gaz dans la soufflante 1 (ou ensemble propulsif 2). De même, par convention dans la présente demande, les termes « interne » et « externe », « intérieur » et « extérieur » sont définis radialement par rapport à l'axe longitudinal (ou axial) X de l'ensemble propulsif 2, qui est notamment l'axe de rotation des rotors des compresseurs et turbines du générateur de gaz.

Le carter rotatif 3 comprend un arbre annulaire interne centré sur l'axe X qui, en fonctionnement est entraîné par la turbine de puissance via le réducteur de vitesse. Le carter rotatif 3 comporte en outre un anneau 16 de support des pales 5.

Plus précisément, chaque pale 5 comprend un pied se présentant par exemple sous forme d'une attache en forme de bulbe, ce pied étant solidaire d'un pivot 18 monté dans un logement 19 d'une base 20 en saillie de l'anneau 16 de manière mobile en rotation autour d'un axe Y sensiblement radial via deux paliers à roulement. Les paliers à roulement placés dans chaque logement 19 sont généralement lubrifiés à la graisse. La soufflante comporte un système de changement de pas 22 des pales 5 ou système de calage des pales 5 autour de leur axe Y, et plus précisément de l'angle de calage des pales 5 qui correspond pour une pale 5 à l'angle, dans un plan longitudinal perpendiculaire à l'axe Y, entre la corde de la pale 5 et le plan de rotation de la soufflante 1.

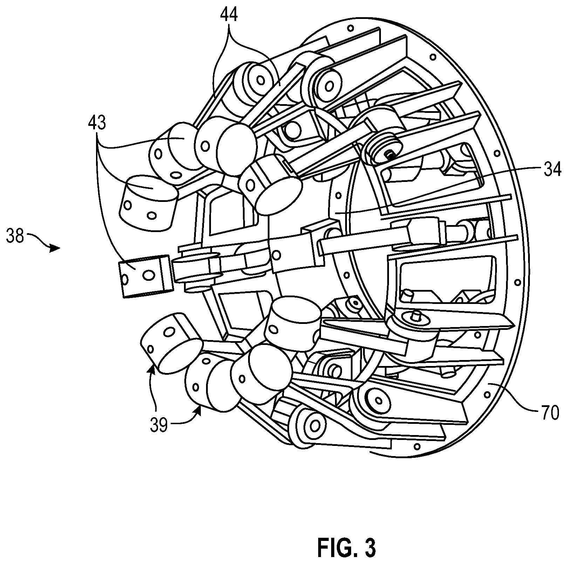

Les pales 5 sont calées en position « inversion de poussée » (connue sous la désignation anglaise « reverse ») sur les figures 1 et 3. Dans la position « inversion de poussée », l'angle de calage des pales 5 est négatif. Cette position des pales 5 permet de générer une contre-poussée, et ainsi de participer au ralentissement de l'aéronef en complément des freins de manière à réduire sa distance de freinage lors de l'atterrissage.

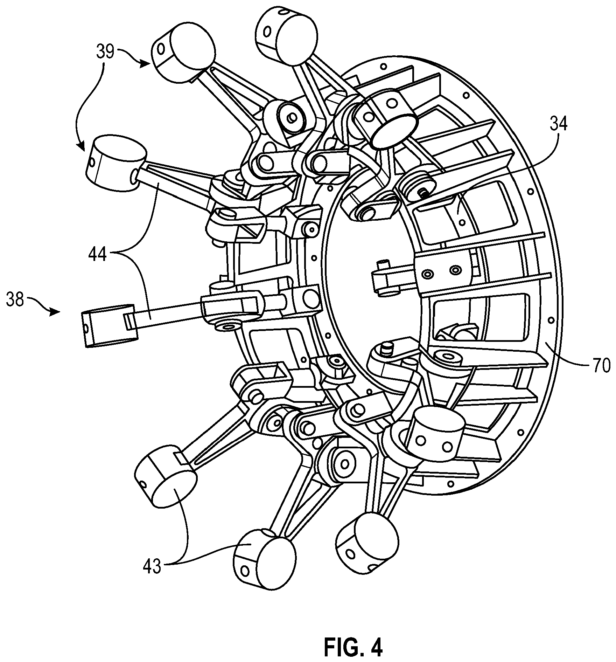

Les pales 5 sont calées en position drapeau sur les figures 2 et 4. Dans la position drapeau, l'angle de calage est positif et généralement sensiblement égal à 90°. Cette position des pales 5 permet de limiter la résistance (traînée) générée par ces dernières.

Selon le mode de réalisation illustré sur les figures et notamment les figures 1 et 3, le système de changement de pas 22 des pales 5 comprend un dispositif de commande ou actionneur 23 annulaire linéaire, centré sur l'axe X, commun à toutes les pales 5 et un mécanisme de liaison 24 relié à chaque pale 5, ce mécanisme de liaison 24 permettant de transformer le mouvement linéaire initié par l'actionneur 23 en un mouvement de rotation de la pale 5 correspondante.

Plus précisément, l'actionneur 23 linéaire comporte un corps annulaire fixe 25 rapporté sur un support annulaire (centré sur X) du rotor 3, il est donc agencé dans le repère tournant lié au rotor. En d'autres termes, le corps fixe 25 est solidaire en rotation du rotor 3. L'actionneur 23 linéaire comporte en outre un corps mobile 27, celui-ci étant mobile en translation par rapport au corps fixe 25 le long de l'axe X. Avantageusement, l'actionneur 23 linéaire est hydraulique. De préférence, l'actionneur 23 est un vérin hydraulique comprenant un cylindre fixe solidaire de l'arbre du rotor 3 formant le corps fixe 25 de l'actionneur et une tige formant le corps mobile 27 de l'actionneur.

Le mécanisme de liaison 24 du système de changement de pas 22 comporte en outre une couronne 34 de synchronisation solidaire du corps mobile 27 de l'actionneur 23. La couronne 34 de synchronisation est centrée sur l'axe longitudinal X et est destiné à entraîner le calage de pales 5 simultanément.

Le mécanisme de liaison 24 permettant de transformer le mouvement linéaire de l'actionneur en un mouvement de rotation de la pale 5 comprend en outre, pour chaque pale 5, une biellette 35. Une des extrémités de la biellette 35 est montée de manière libre en rotation selon un axe D sensiblement radial avec la couronne de synchronisation 34 via une chape et l'autre extrémité est montée de manière libre en rotation avec un excentrique 36 relié au pied de la pale 5 correspondante via par exemple une liaison par cannelures. L'axe D est décalé par rapport à l'axe Y de rotation de la pale 5. La biellette 35 et l'excentrique 36 permettent de démultiplier l'effort nécessaire pour régler le calage de la pale 5 correspondante.

Le mouvement linéaire du corps mobile 27 de l'actionneur 23 permet de régler de manière synchronisée le calage de l'ensemble des pales 5 via notamment la couronne de synchronisation 34.

La soufflante 1 comprend également un dispositif de mise en drapeau 38 des pales 5, en particulier en cas de défaillance (ou panne) du dispositif de changement de pas 22, et par exemple une défaillance dans l'alimentation hydraulique de l'actionneur 23 linéaire. Pour rappel, la position drapeau correspond à un calage positif généralement sensiblement égal à 90°.

Le dispositif de mise en drapeau 38 comprend au moins un mécanisme 39 comportant au moins un levier 40 articulé par une liaison pivot 80 autour d'un axe A fixe par rapport au rotor 3. L'axe A est ici rectiligne et perpendiculaire à l'axe X. Le levier 40 présente une première extrémité 41 et une deuxième extrémité 42. Une masselotte 43 est solidaire de la première extrémité 41 et la deuxième extrémité 42 est couplée à la couronne de synchronisation 34 via une biellette 60. La masselotte 43 est apte, sous l'effet centrifuge, à être déplacée dans une position (voir figures 2 et 4) dans laquelle la couronne de synchronisation 34 impose une position drapeau aux pales 5. Les mécanismes 39 du dispositif de mise en drapeau 38 sont répartis angulairement de manière régulière autour de l'axe X. Ainsi, l'ensemble des masselottes 43 forment une rangée annulaire centrée sur l'axe longitudinal X et espacées angulairement de manière régulière.

Selon le mode de réalisation illustré sur les figures 3 et 4, le dispositif de mise en drapeau 38 comprend dix mécanismes 39 répartis angulairement de manière régulière autour de l'axe X.

Selon le mode de réalisation illustré sur les figures, pour chaque mécanisme 39, le levier 40 a une forme de L ou V en coupe axiale. Le levier comporte deux branches espacées angulairement et reliées au niveau de l'articulation du levier en A par une liaison pivot de préférence, une première branche 44 supportant la masselotte et une deuxième branche 45 couplée à la couronne de synchronisation 34 par l'intermédiaire de la biellette 60. La longueur de la première branche 44 est supérieure à la longueur de la deuxième branche 45, environ deux fois supérieur dans le cas présent. Ce rapport de longueur permet de multiplier l'effort fourni par chaque masselotte 43, et autrement dit de minimiser leur masse, et de manière plus générale, la masse de l'ensemble des masselottes 43.

Le levier est articulé par rapport au carter rotatif en A par une liaison pivot, de préférence formée par un roulement à aiguilles ou par deux roulements à billes.

La deuxième extrémité 42 du levier 40 et une extrémité axiale amont 60A de la biellette 60 sont couplées par une première articulation sphérique 62 autour d'un axe C, communément appelée rotule ou liaison rotule. De même, une extrémité axiale aval 60B de la biellette 60 est articulée dans une chape de la couronne 34 de synchronisation de préférence par une seconde articulation sphérique autour d'un axe D.

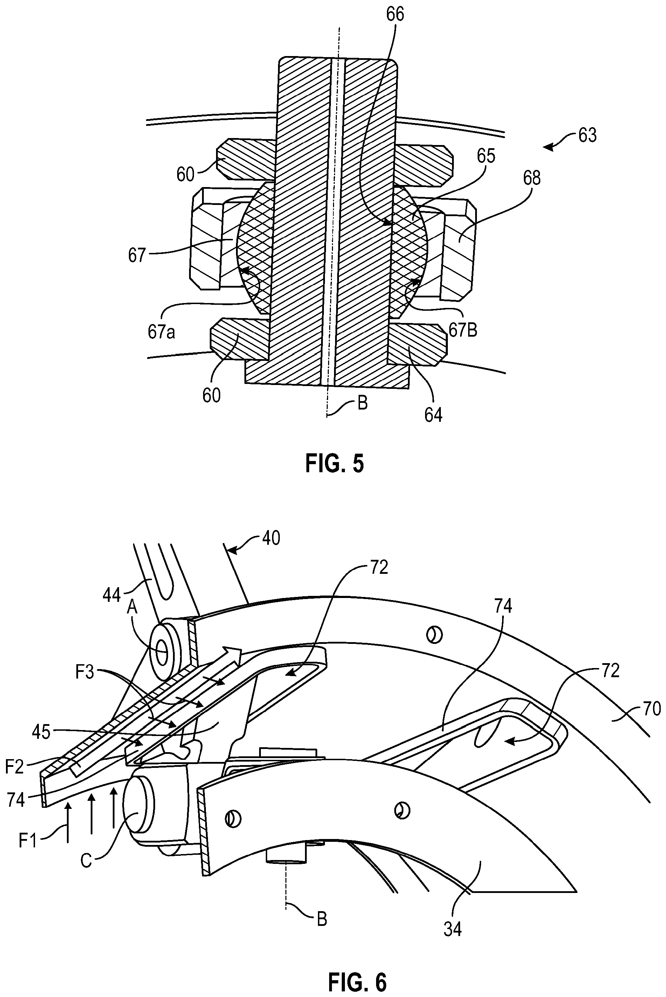

La figure 5 illustre cette articulation sphérique 63. Celle-ci est montée de manière solidaire dans une fourchette 64 de l'extrémité axiale aval de la biellette 60. L'articulation sphérique 63 comprend une sphère 65 présentant un trou radial 66, cette sphère 65 étant enfermée dans un logement formé dans une bague 67. Le logement est délimité par deux surfaces 67a, 67b formant des portions de demi-sphères adaptées pour recevoir la sphère 65. La couronne 34 de synchronisation comprend une chape 68 présentant une fourchette s'étendant selon l'axe longitudinal X montée de manière libre en rotation autour de l'anneau en contact avec la sphère 65 selon un axe B sensiblement radial. La première articulation sphérique 62 est similaire et d'axe C perpendiculaire à l'axe B de la seconde articulation sphérique 63. Les orientations ainsi que les composants des liaisons des extrémités 41 et 42 peuvent être inversés. Plus précisément; la sphère 65 et son anneau 67 peuvent être supportés soient par la couronne de synchronisation 34 soit par la biellette 60 et la position des axes B et C parallèle ou perpendiculaire l'un à l'autre comme présenté.

En plus de sa fonction structurale le carter rotatif comporte une section annulaire conique appelé par la suite chapeau annulaire 70 s'évasant de l'amont vers l'aval, les leviers étant articulé autour de l'axe A par rapport au chapeau 70. Plus précisément, tel qu'illustré sur la figure 6, l'axe A traverse (transversalement) de part en part le chapeau 70. Le chapeau 70 comporte des orifices 72 de passage du second bras des leviers articulés par rapport au chapeau, le premier bras du levier et la masselotte correspondante étant situés radialement à l'extérieur du chapeau 70.

En outre, chaque orifice du chapeau comporte avantageusement un déflecteur 74 s'étendant radialement vers l'intérieur sur le pourtour de l'orifice permettant de limiter la propagation radiale de fluide par effet centrifuge. En fonctionnement, le fluide est alors guidé selon les flèches F1, F2 et F3 sans nécessiter de tuyaux d'évacuation.

Lorsque l'ensemble propulsif 2 fonctionne de manière normale (pas de défaillance), le dispositif de mise en drapeau 38 est subordonné au système 22 de changement de pas des pales 5, et plus précisément à l'actionneur 23 linéaire. On note que lorsque les pales 5 sont en position « inversion de poussée », les masselottes 43 des mécanismes 39 du dispositif de mise en drapeau 38 des pales 5 sont à proximité de l'axe longitudinal X du rotor 3 tel qu'illustré sur les figures 1 et 3.

En cas de défaillance (nécessité de positionner les pales 5 en position drapeau), par exemple une défaillance dans l'alimentation hydraulique de l'actionneur 23 linéaire, le système 22 de calage des pales 5 devient alors subordonné au dispositif de mise en drapeau 38, et plus précisément des masselottes 43 qui sous l'effet centrifuge se retrouve plus éloignées de l'axe longitudinal X du rotor 3 tel qu'illustré sur les figures 2 et 4, pour imposer une position drapeau aux pales 5.

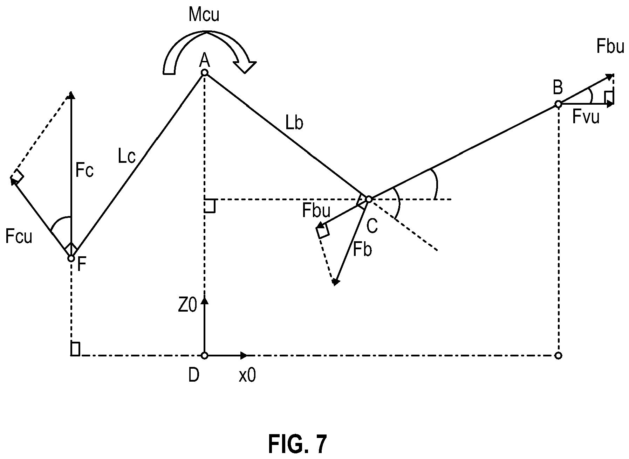

En effet, en regard de la figure 7, chaque masselotte 43 (en F) centrifugée par la rotation du moteur crée une force centrifuge Fc. Chaque masselotte 43 est reliée à un levier permettant le passage de la force centrifuge par la surface de contact. La composante orthogonale de cette force Fcu via le bras de levier Lc crée un moment Mcu. Ce moment est ensuite transmis via le bras de levier Lb. Ainsi, il y a une multiplication de l'effort centrifuge au travers du levier via le rapport entre Lc et Lb. La force Fb transmise à la biellette en C, est projetée colinéaire à ses liaisons en Fbu. Cette force de traction est ensuite transmise au vérin qui récupère une force Fvu l'entrainant en translation vers la position de drapeau.

Le mécanisme de contrepoids à levier agit ainsi sur le vérin qui est lié cinématiquement avec le mécanisme d'actionnement aux pales. Le nombre de contrepoids à levier est ainsi indépendant du nombre de pale. Le mécanisme de contrepoids à levier impose le sens de la position de drapeau à la cinématique d'actionnement de pas.

L'invention telle que décrite présente les avantages :
- de minimiser la masse d'un système de rappel à contrepoids,
- de minimiser les efforts sur l'actionnement,
- d'éviter les problèmes d'hyperstatisme, et
- d'éviter la rétention des fluides, notamment des fluides de lubrifications.

On note que les exemples illustrés sur les figures ne sont en rien limitatif, le système de changement de pas des pales selon l'invention pourrait par exemple être incorporé au rotor d'une hélice d'un turbopropulseur ou bien encore au rotor de chacune des deux hélices d'une turbomachine comprenant deux hélices contrarotatives, plus connue sous la désignation anglaise « Open Rotor ».

En outre, dans les exemples illustrés sur les figures, le corps du vérin est lié au rotor (dans le repère tournant) et la tige du vérin, qui est fixée au référentiel fixe lié au carter est mobile en translation par rapport au corps du vérin, la couronne de synchronisation étant liée à la tige du vérin. Cependant, l'invention pourrait également s'appliquer à un système dans lequel le corps du vérin serait fixé à la couronne de synchronisation et mobile en translation par rapport à la tige du vérin. Ainsi selon la configuration du vérin, l'ensemble du dispositif de mise en drapeau est soutenu par un carter lié directement au vérin ou à la structure du moteur.

Un tel dispositif de mise en drapeau s'applique plus généralement à toute turbomachine comprenant un dispositif de commande du calage des pales pour lequel un dispositif de mise en drapeau est nécessaire.

## Revendications

1. Module (1) de soufflante à pales à calage variable pour un ensemble propulsif d'axe longitudinal (X), ledit module comprenant :
- un carter rotatif (3) autour de l'axe longitudinal (X) et portant les pales (5),
- un système de changement du calage (22) des pales comprenant un dispositif de commande (23) et un mécanisme de liaison (24), le dispositif de commande comportant un actionneur annulaire centré sur l'axe longitudinal (X) ayant un corps fixe (25) rapporté sur le carter rotatif et un corps mobile (27) en translation par rapport au corps fixe le long de l'axe longitudinal (X), le corps mobile étant couplé à une couronne de synchronisation (34) du mécanisme de liaison, ladite couronne de synchronisation étant reliée aux pales (5) et configurée pour être entraînée en translation le long de l'axe longitudinal (X) par le corps mobile de manière à changer le calage des pales ; et
- un dispositif de mise en drapeau (38) des pales (5), en particulier en cas de défaillance dudit dispositif de commande, ledit dispositif de mise en drapeau comprenant une rangée annulaire de masselottes (43) portées par le carter rotatif (3),
**caractérisé en ce que** la rangée annulaire de masselottes (43) est couplée à la couronne de synchronisation (34), chacune des masselottes étant reliée à la couronne de synchronisation par une biellette (60) dont une première et une seconde extrémités comportent des liaisons rotule (62, 63) et les masselottes étant aptes, sous l'effet centrifuge, à être déplacées dans une position dans laquelle la couronne de synchronisation impose une position drapeau aux pales.

2. Module de soufflante selon la revendication 1, dans lequel les liaisons rotule (62, 63) reliant la première extrémité (60B) de la biellette (60) à la couronne de synchronisation (34) et reliant la seconde extrémité (60A) de la biellette (60) aux masselottes (43) ont des axes perpendiculaires.

3. Module de soufflante selon la revendication 1 ou 2, dans lequel le dispositif de mise en drapeau (38) comporte des leviers (40), chacun articulé autour d'un axe (A) fixe par rapport au carter rotatif (3) agencé entre un premier et un deuxième bras (44, 45) du levier, le premier bras (44) étant solidaire d'une masselotte (43) et le deuxième bras (45) étant relié à la seconde extrémité de la biellette (60) par une des liaisons rotule (62), les deux bras étant fixes l'un par rapport à l'autre.

4. Module de soufflante selon la revendication 3, dans lequel chaque levier (40) est articulé par rapport au carter rotatif (3) par une liaison pivot (80), de préférence formée par un roulement à aiguilles ou par deux roulements à billes.

5. Module de soufflante selon l'une des revendications 3 ou 4, dans lequel ledit carter rotatif comporte un chapeau (70) annulaire, et au moins un levier (40) est articulé autour dudit axe (A) par rapport au chapeau (70).

6. Module de soufflante selon la revendication 5, dans lequel le chapeau (70) comporte au moins un orifice de passage (72) du second bras (45) du au moins un levier (40) articulé par rapport au chapeau (70), le premier bras (44) du levier étant situé radialement à l'extérieur du chapeau.

7. Module de soufflante selon la revendication 6, dans lequel le ou chaque orifice (72) du chapeau (70) comporte un déflecteur (74) s'étendant radialement vers l'intérieur sur le pourtour de l'orifice (72).

8. Ensemble propulsif (2) d'axe longitudinal (X) comportant au moins un module de soufflante à pales à calage variable selon l'une des revendications précédentes.

## Patentansprüche

1. Gebläsemodul (1) mit Schaufeln mit variabler Feststellposition für eine Antriebsmontage mit Längsachse (X), wobei das Modul umfasst:
- ein um die Längsachse (X) herum drehbares und die Schaufeln (5) tragendes Gehäuse (3),
- ein System zur Veränderung der Feststellposition (22) der Schaufeln, umfassend eine Steuereinheit (23) und einen Verbindungsmechanismus (24), wobei die Steuereinheit eine ringförmige Betätigungsvorrichtung umfasst, die auf der Längsachse (X) zentriert ist, mit einem an dem drehbaren Gehäuse angebrachten stationären Körper (25) und einem in Bezug auf den stationären Körper entlang der Längsachse (X) translatorisch beweglichen Körper (27), wobei der bewegliche Körper mit einer Synchronisationskrone (34) des Verbindungsmechanismus gekoppelt ist, wobei die Synchronisationskrone mit den Schaufeln (5) verbunden und konfiguriert ist, um entlang der Längsachse (X) durch den beweglichen Körper derart translatorisch angetrieben zu werden, um die Feststellposition der Schaufeln zu verändern; und
- eine Vorrichtung (38) zur Segelstellung der Schaufeln (5), insbesondere im Fall von Versagen der Steuereinheit, wobei die Vorrichtung zur Segelstellung eine ringförmige Reihe von Fliehgewichten (43) umfasst, die von dem drehbaren Gehäuse (3) getragen werden,
**dadurch gekennzeichnet, dass** die ringförmige Reihe von Fliehgewichten (43) mit der Synchronisationskrone (34) gekoppelt ist, wobei jedes der Fliehgewichte durch eine Schubstange (60), von der ein erstes und ein zweites Ende Kugelgelenkverbindungen (62, 63) umfassen, mit der Synchronisationskrone verbunden ist, und die Fliehgewichte in der Lage sind, unter der Zentrifugenwirkung in eine Position verlagert zu werden, in der die Synchronisationskrone den Schaufeln eine Segelposition auferlegt.

2. Gebläsemodul nach Anspruch 1, wobei die Kugelgelenkverbindungen (62, 63), die das erste Ende (60B) der Schubstange (60) mit der Synchronisationskrone (34) verbinden und das zweite Ende (60A) der Schubstange (60) mit den Fliehgewichten (43) verbinden, senkrechte Achsen aufweisen.

3. Gebläsemodul nach Anspruch 1 oder 2, wobei die Vorrichtung (38) zur Segelstellung Hebel (40) umfasst, jeder in Bezug auf das drehbare Gehäuse (3) um eine stationäre Achse (A) herum angelenkt, das zwischen einem ersten und einem zweiten Arm (44, 45) des Hebels angeordnet ist, wobei der erste Arm (44) mit einem Fliehgewicht (43) stationär verbunden ist und der zweite Arm (45) durch eine der Kugelgelenkverbindungen (62) mit dem zweiten Ende der Schubstange (60) verbunden ist, wobei die zwei Arme in Bezug aufeinander stationär sind.

4. Gebläsemodul nach Anspruch 3, wobei jeder Hebel (40) in Bezug auf das drehbare Gehäuse (3) durch eine Schwenkverbindung (80) angelenkt ist, die vorzugsweise aus einem Nadellager oder durch zwei Kugellager gebildet ist.

5. Gebläsemodul nach einem der Ansprüche 3 oder 4, wobei das drehbare Gehäuse einen ringförmigen Aufsatz (70) umfasst und mindestens ein Hebel (40) in Bezug auf den Aufsatz (70) um die Achse (A) herum angelenkt ist.

6. Gebläsemodul nach Anspruch 5, wobei der Aufsatz (70) mindestens eine Durchgangsöffnung (72) des zweiten Arms (45) des mindestens einen Hebels (40) umfasst, der in Bezug auf den Aufsatz (70) angelenkt ist, wobei der erste Arm (44) des Hebels sich radial an der Außenseite des Aufsatzes befindet.

7. Gebläsemodul nach Anspruch 6, wobei jede Öffnung (72) des Aufsatzes (70) einen Deflektor (74) umfasst, der sich an dem Umfang der Öffnung (72) radial zur Innenseite erstreckt.

8. Antriebsmontage (2) mit Längsachse (X), die mindestens ein Gebläsemodul mit Schaufeln mit variabler Feststellposition nach einem der vorstehenden Ansprüche umfasst.

## Claims

1. A fan module (1) having variable pitch blades for a propulsion assembly having a longitudinal axis (X), said module comprising:
- a rotary casing (3) which rotates about the longitudinal axis (X) and carries the blades (5),
- a system for changing the pitch (22) of the blades comprising a control device (23) and a connection mechanism (24), the control device comprising an annular actuator centred on the longitudinal axis (X) having a stationary body (25) fitted to the rotary casing and a body (27) movable in translation relative to the stationary body along the longitudinal axis (X), the movable body being coupled to a synchronising ring gear (34) of the connection mechanism, said synchronising ring gear being connected to the blades (5) and configured to be driven in translation along the longitudinal axis (X) by the movable body so as to change the pitch of the blades; and
- a device (38) for feathering the blades (5), in particular in the event of failure of said control device, said feathering device comprising an annular row of fly-weights (43) carried by the rotary casing (3),
**characterised in that** the annular row of fly-weights (43) is coupled to the synchronising ring gear (34), each of the fly-weights being connected to the synchronising ring gear by a connecting rod (60), a first and a second end of which comprise ball-and-socket joints (62, 63), and the fly-weights being capable, under the centrifugal effect, of being displaced into a position in which the synchronising ring gear imposes a feathered position on the blades.

2. The fan module as claimed in claim 1, wherein the ball-and-socket joints (62, 63) connecting the first end (60B) of the connecting rod (60) to the synchronising ring gear (34) and connecting the second end (60A) of the connecting rod (60) to the fly-weights (43) have perpendicular axes.

3. The fan module according to claim 1 or 2, wherein the feathering device (38) comprises levers (40), each articulated about an axis (A) stationary relative to the rotary casing (3) arranged between a first and a second arm (44, 45) of the lever, the first arm (44) being secured to a fly-weight (43) and the second arm (45) being connected to the second end of the connecting rod (60) by one of the ball-and-socket joints (62), the two arms being stationary relative to each other.

4. The fan module according to claim 3, wherein each lever (40) is articulated relative to the rotary casing (3) by a pivot connection (80), preferably formed by a needle bearing or by two ball bearings.

5. The fan module according to one of claims 3 or 4, wherein said rotary casing comprises an annular cap (70), and at least one lever (40) is articulated about said axis (A) relative to the cap (70).

6. The fan module according to claim 5, wherein the cap (70) comprises at least one orifice (72) for passage of the second arm (45) of the at least one lever (40) articulated with respect to the cap (70), the first arm (44) of the lever being situated radially outside the cap.

7. The fan module as claimed in claim 6, wherein said at least one orifice (72) in the cap (70) comprises a deflector (74) extending radially inwardly around the periphery of the orifice (72).

8. A propulsion assembly (2) with a longitudinal axis (X) comprising at least one fan module with variable pitch blades according to one of the preceding claims.
